# EUROPEAN PATENT SPECIFICATION

(11) **EP 2 587 761 B1**
(45) Date of publication and mention of the grant of the patent: **14.12.2016**
(21) Application number: 12006966.1
(22) Date of filing: 08.10.2012
(51) Int. Cl.: H04L 29/08, G06Q 10/10, H04W 4/20

(54) **Advanced content hosting**
Fortschrittliches Hosting von Inhalten
Hébergement de contenu avancé

(30) Priority: 08.10.2011 US 201161545147 P; 27.12.2011 US 201113337495
(43) Date of publication of application: 01.05.2013
(73) Proprietor: Broadcom Corporation, Irvine, CA 92617 (US)
(72) Inventor: Diab, Wael, 94109 San Francisco, CA (US)
(74) Representative: Jehle, Volker Armin

(56) References cited:
- WO-A2-01/76192
- US-B1- 6 466 980

## Description

### CROSS REFERENCE TO RELATED PATENTS/PATENT APPLICATIONS

### Provisional Priority Claim

The present U.S. Utility Patent Application claims priority pursuant to 35 U.S.C. § 119(e) to the following U.S. Provisional Patent Application which is made part of the present U.S. Utility Patent Application for all purposes:
1. U.S. Provisional Patent Application Serial No. 61/545,147, entitled "Social Network Device Memberships and Resource Allocation," (Attorney Docket No. BP23771), filed 10-08-2011, pending.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

### 1. Field of the Invention

This invention relates generally to social networking, and more particularly to social network device memberships, content hosting and storage, resource allocation, and related services and communications.

### 2. Related Art

The popularity and growth of social network sites and services has increased dramatically over the last few years. Existing social network sites include Facebook, Google+, Twitter, MySpace, YouTube, LinkedIn, Flicker, Jaiku, MYUBO, Bebo and the like. Such social networking sites are typically organized around user profiles and/or collections of content.

In many popular social networks, especially profile-focused social networks, activity centers on web pages or social spaces that enable members to communicate and share activities, interests, opinions, status updates, audio/video content, etc. across networks of contacts. Social networking services might also allow members to track certain activities of other members of the social network, collaborate, locate and connect with former acquaintances and colleagues, and establish new connections with other members.

While social networks are usually comprised of individuals, members might also include companies, restaurants, political parties and event profiles that are represented in a like manner to human members (e.g., profile pages accessible by members of a social network). Individual members typically connect to social networking services through existing web-based platforms via a computing device and/or mobile smartphone. Smartphone and games-based mobile social networking services are other rapidly developing areas.

In so-called "cloud" computing, computing tasks are performed on remote computers/servers which are typically accessed via internet connections. One benefit of cloud computing is that may reduce the relative processing capabilities required by user devices (e.g., a cloud computer may load a webpage accessed by a tablet and communicate only required information back to the tablet).

Recent years have also witnessed an ever-growing amount of content and application software being migrated from local or on-site storage to cloud-based data storage and management. Such software functionality/services and content are typically available on-demand via (virtualized) network infrastructures.

In traditional social networks, content hosting typically employs very simplistic, location or regional-based approaches. Furthermore, load balancing involving content hosting is typically performed by servers based on traffic considerations.

In addition, power infrastructure is often designed for peak consumption, and generally needs to accommodate the highest capacity demand. Peak demand, however, typically occurs for a relatively short duration and it can be difficult to predict when peaks/troughs will occur. Over-provisioning of resources to meet short periods of high demand might prove too costly for many systems.

Further related prior-art is WO01/76192.

### BRIEF SUMMARY OF THE INVENTION

The invention is defined by the independent claims.

According to an aspect, a device comprises:
a memory; and
processing circuitry interoperable with the memory and configured to:
   store, in a first location, at least one instance of an item of content for distribution via a social network;
   occasionally determine a level of demand for the item of content, the level of demand determined, at least in part, based on a frequency at which access to the item of content is requested by members of the social network;
   distribute at least one additional instance of the item of content to at least a second location in response to the level of demand exceeding a first threshold level; and
   in response to the level of demand falling below a second threshold, remove the additional instance of content from the at least a second location.

Advantageously, the processing circuitry is further configured to:
in response to projecting that the level of demand will exceed the first threshold level, distribute at least one instance of the item of content to the social network to be stored on a plurality of other devices associated with the social network, each of the plurality of other devices storing at least one instance of the item of content.

Advantageously, the processing circuitry is further configured to:
in response to projecting that the level of demand will exceed the first threshold level, distribute at least one instance of the item of content to the social network to be stored on a cloud computing network; and
in response to projecting that the level of demand will not exceed the second threshold level, distribute at least one instance of the item of content to be stored on an external local server node.

Advantageously, the at least one instance of the item of content stored on the cloud computing network is a low-quality instance, and the at least one instance of the item of content stored on an external local server node is a high-quality instance.

Advantageously, the processing circuitry is further configured to:
in response to the elapsing of a period of time, limit access by at least one member of the social network to at least one instance of the item of content.

Advantageously, the processing circuitry is further configured to:
transcode the at least one additional instance of the item of content to a low-quality format in response to the level of demand exceeding a first threshold level.

Advantageously, the level of demand including a quantity of downloads of the item of content over a period of time.

According to an aspect, a device comprises:
a memory; and
a processing circuitry, the processing circuitry interoperable with the memory and configured to:
   acquire historical activity data associated with at least one member of a social network, the historical activity data including the at least one member's historical interactions with at least one other member of the social network; and
   based upon the historical activity data, select at least one network node to enable connections between the at least one member and other members of the social network.

Advantageously, the at least one network node is a server node that is local to the device.

Advantageously, the historical activity data is acquired via real-time data mining of information associated with the at least one member.

Advantageously, the processing circuitry is further configured to:
In response to determining, based on the historical activity data, that the at least one member's activity on the social network exceeds a threshold, select at least one network node to provide a high-bandwidth connection between the at least one member and at least one other member of the social network.

According to an aspect, a device comprises:
a memory; and
a processing circuitry, the processing circuitry interoperable with the memory and configured to:
   receive a notice that a user desires to upload at least one content item to a social network;
   in response to receiving the notice, collect information associated with the at least one content item;
   determine a level of importance to assign to the at least one content item; and transcode a copy of the at least one content item to a first format, based on the level of importance assigned to the at least one content item.

Advantageously, the information associated with the at least one content item including a user-provided indication of a desired storage location for at least one instance of the at least one content item.

Advantageously, the information associated with the at least one content item including content metadata.

Advantageously, the level of importance assigned to the at least one content item including a projected demand for the at least one content item and the first format is a low-quality format.

Advantageously, the processing circuitry is further configured to:
in response to determining that projected demand for the at least one content item is high, transcode an instance of the at least one content item to a high-quality format; and
in response to determining that projected demand for the at least one content item is low, transcode an instance of the at least one content item to a low-quality format.

Advantageously, the processing circuitry is further configured to:
in response to determining that the information associated with the at least one content item has been updated, re-transcode the instance of the at least one content item to a second format.

Advantageously, the processing circuitry is further configured to:
store a low-quality instance of the at least one content item on a network node, the low-quality instance available for immediate access by a member of the social network; and
store a high-quality instance of the at least one content item on a device, the high-quality instance accessible to a member of the social network based upon demand for a high-quality instance of the at least one content item.

Advantageously, the processing circuitry is further configured to:
in response to receiving notification that at least one instance of the at least one content item has been accessed by at least one member of the social network, debit an account associated with the at least one member.

Advantageously, the processing circuitry is further configured to:
in response to receiving notification that at least one instance of the at least one content item has been accessed by at least one other member of the social network, credit an account associated with the user.

### BRIEF DESCRIPTION OF THE DRAWINGS

FIG. 1 and FIG. 2 are diagrams illustrating communication systems according to various embodiments of the disclosure;
FIG. 3 illustrates an embodiment of a social network according to various embodiments of the disclosure;
FIG. 4 illustrates social device membership and access in a social network according to various embodiments of the disclosure;
FIG. 5 illustrates a social device according to various embodiments of the disclosure;
FIG. 6 illustrates an embodiment of a network according to various embodiments of the disclosure;
FIG. 7 illustrates an embodiment of a network according to various embodiments of the disclosure; and
FIG. 8 is a flow diagram according to an embodiment of the disclosure.

### DETAILED DESCRIPTION OF THE INVENTION

As used herein, the terms "social network" and "SNET" comprise a grouping or social structure of devices and/or individuals, as well as connections, links and interdependencies between such devices and/or individuals. Members or actors (including devices) within or affiliated with an SNET may be referred to herein as "nodes", "social devices", "SNET members", "SNET devices", "user devices" and/or "modules". In addition, the terms "SNET circle", "SNET group" and "SNET sub-circle" generally denote an SNET that comprises SNET devices and, as contextually appropriate, human SNET members and personal area networks ("PAN").

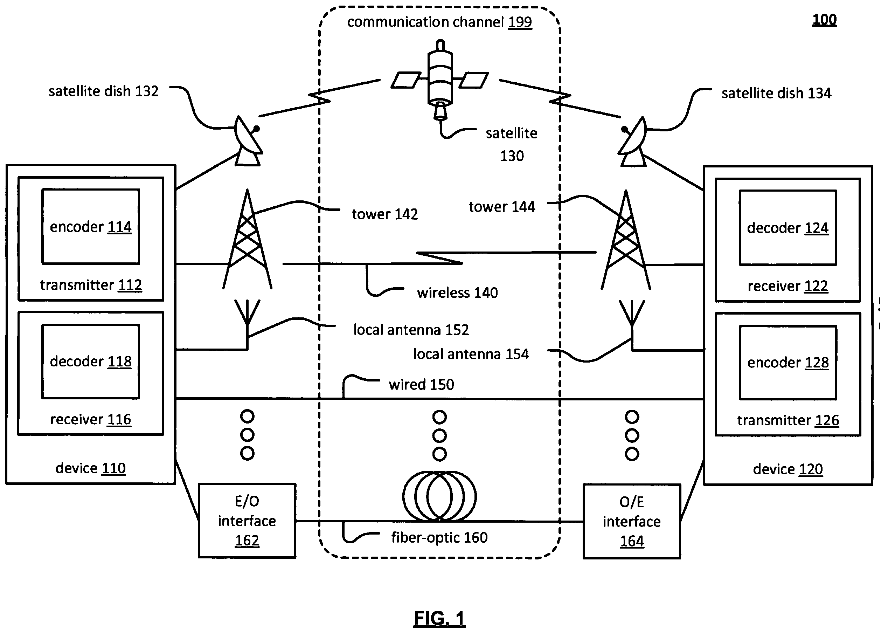

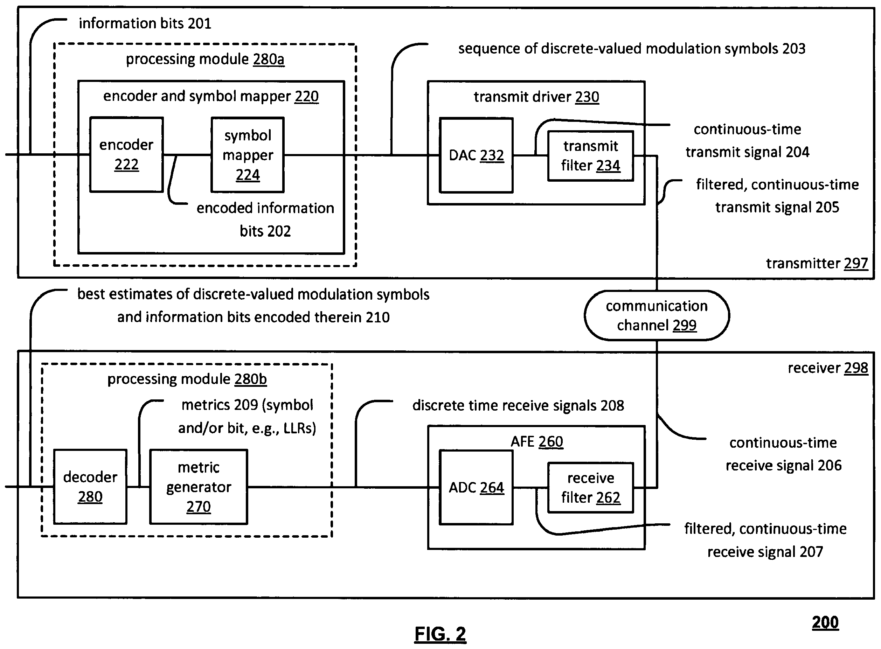

FIG. 1 and FIG. 2 illustrate various embodiments of communication systems 100 and 200, respectively. Within such communication systems, signals are transmitted between various communication devices. A primary goal of digital communications systems is to transmit digital data from one location, or subsystem, to another either error free or with an acceptably low error rate. As shown in FIG. 1, data may be transmitted over a variety of communications channels in a wide variety of communication systems: magnetic media, wired, wireless, fiber, copper, and other types of media.

Referring first to FIG. 1, this embodiment of a communication system 100 is a communication channel 199 that communicatively couples a communication device 110 (including a transmitter 112 having an encoder 114 and including a receiver 116 having a decoder 118) situated at one end of the communication channel 199 to another communication device 120 (including a transmitter 126 having an encoder 128 and including a receiver 122 having a decoder 124) at the other end of the communication channel 199. In some embodiments, either of the communication devices 110 and 120 may only include a transmitter or a receiver. There are several different types of media by which the communication channel 199 may be implemented (e.g., a satellite communication channel 130 using satellite dishes 132 and 134, a wireless communication channel 140 using towers 142 and 144 and/or local antennae 152 and 154, a wired communication channel 150, and/or a fiber-optic communication channel 160 using electrical to optical (E/O) interface 162 and optical to electrical (O/E) interface 164)). In addition, more than one type of media may be implemented and interfaced together thereby forming the communication channel 199.

To reduce transmission errors that may undesirably be incurred within a communication system, error correction and channel coding schemes are often employed. Generally, these error correction and channel coding schemes involve the use of an encoder at the transmitter end of the communication channel 199 and a decoder at the receiver end of the communication channel 199.

Any of various types of ECC codes described can be employed within any such desired communication system (e.g., including those variations described with respect to FIG. 1), any information storage device (e.g., hard disk drives (HDDs), network information storage devices and/or servers, etc.) or any application in which information encoding and/or decoding is desired.

Generally speaking, when considering a communication system in which social media content and other data is communicated from one social network, location, or subsystem, to another, video data encoding may generally be viewed as being performed at a transmitting end of the communication channel 199, and video data decoding may generally be viewed as being performed at a receiving end of the communication channel 199.

Also, while the embodiment of this diagram shows bi-directional communication being capable between the communication devices 110 and 120, it is of course noted that, in some embodiments, the communication device 110 may include only video data encoding capability, and the communication device 120 may include only video data decoding capability, or vice versa (e.g., in a uni-directional communication embodiment such as in accordance with a video broadcast embodiment).

Referring to the communication system 200 of FIG. 2, at a transmitting end of a communication channel 299, information bits 201 (e.g., corresponding particularly to video data in one embodiment) are provided to a transmitter 297 that is operable to perform encoding of these information bits 201 using an encoder and symbol mapper 220 (which may be viewed as being distinct functional blocks 222 and 224, respectively) thereby generating a sequence of discrete-valued modulation symbols 203 that is provided to a transmit driver 230 that uses a DAC (Digital to Analog Converter) 232 to generate a continuous-time transmit signal 204 and a transmit filter 234 to generate a filtered, continuous-time transmit signal 205 that substantially comports with the communication channel 299. At a receiving end of the communication channel 299, continuous-time receive signal 206 is provided to an AFE (Analog Front End) 260 that includes a receive filter 262 (that generates a filtered, continuous-time receive signal 207) and an ADC (Analog to Digital Converter) 264 (that generates discrete-time receive signals 208). A metric generator 270 calculates metrics 209 (e.g., on either a symbol and/or bit basis) that are employed by a decoder 280 to make best estimates of the discrete-valued modulation symbols and information bits encoded therein 210.

Within each of the transmitter 297 and the receiver 298, any desired integration of various components, blocks, functional blocks, circuitries, etc. Therein may be implemented. For example, this diagram shows a processing module 280a as including the encoder and symbol mapper 220 and all associated, corresponding components therein, and a processing module 280 is shown as including the metric generator 270 and the decoder 280 and all associated, corresponding components therein. Such processing modules 280a and 280b may be respective integrated circuits. Of course, other boundaries and groupings may alternatively be performed without departing from the scope and spirit of the disclosure. For example, all components within the transmitter 297 may be included within a first processing module or integrated circuit, and all components within the receiver 298 may be included within a second processing module or integrated circuit. Alternatively, any other combination of components within each of the transmitter 297 and the receiver 298 may be made in other embodiments.

As with the previous embodiment, such a communication system 200 may be employed for the communication of social media content and other data from one social network, location, or subsystem, to another (e.g., from transmitter 297 to the receiver 298 via the communication channel 299).

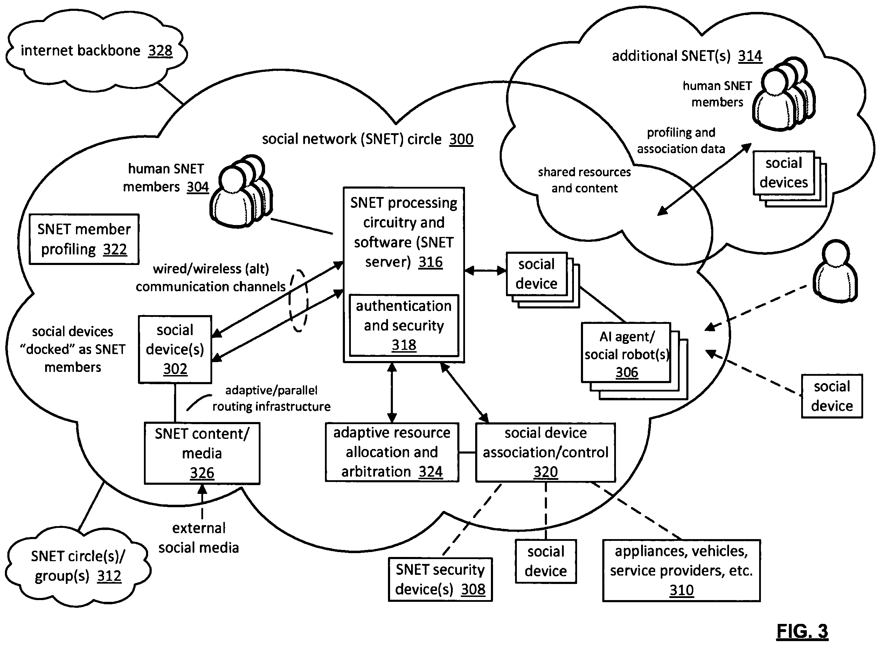

Referring now to FIG. 3, a social network circle/group 300 (hereinafter "SNET circle") comprising social devices 302 is shown. Beyond traditional social networking features and services, an SNET circle 300 and associated social devices 302 according to various embodiments of the disclosure include numerous novel features and attributes as described more fully below with general reference to the illustration.

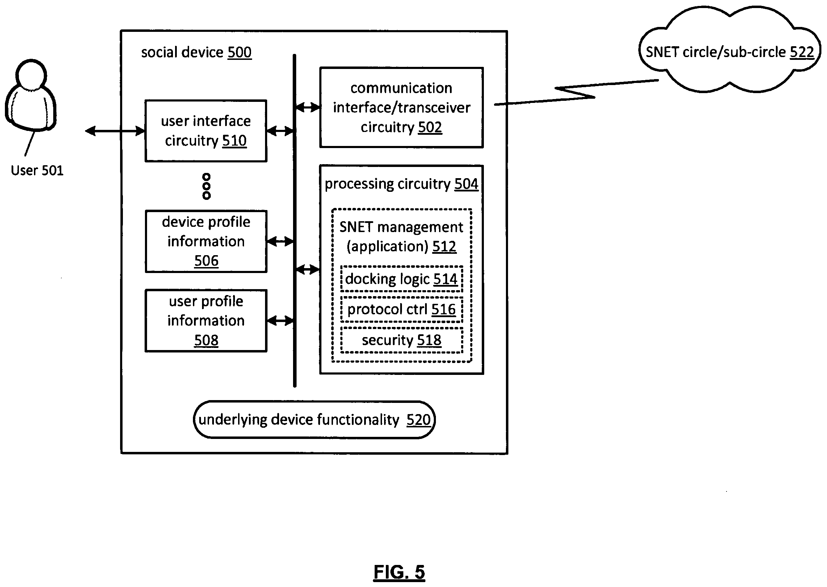

Briefly, membership in the SNET circle 300 may comprise docked social devices 302 (an embodiment of which is described in conjunction with FIG. 5) and human SNET members 304, as well as proxies thereof. Further, SNET circle 300 nodes may include device services and software (e.g., applications) of various types participating as members. By way of example, SNET members might include artificial intelligence agents/social robots 306, SNET security device(s) 308, appliances, vehicles and service providers 310, common or authorized members/functionality of other SNET circles 312, etc. Further, access to specific content and resources of an SNET circle 300 may be shared with members of additional SNET(s) 314, including remote or web-based applications. Such access can be conditioned on acceptable profiling and association data. Similarly, social devices or individuals may be granted temporary or ad hoc memberships, with or without restricted access.

In the illustrated embodiment, formation, maintenance and operation of SNET circle 300 is performed by standalone or distributed SNET processing circuitry and software 316. It is noted that the "SNET processing circuitry" may comprise hardware, software, applications, or various combinations thereof, and be configurable to support various functionalities disclosed herein. Further, the SNET processing circuitry 316 may be included in a standalone server, cloud-based resources, and/or the various types of devices described below, and incorporate authentication and security functionality 318. In addition, specialized middleware may also be utilized by SNETs according to the disclosure, including standardized middleware with an associated certification process. Interactions and interdependencies within the SNET circle 300 may involve one or more of a social device association/control module 320, an SNET member profiling module 322, and an adaptive resource allocation and arbitration module 324 as described more fully below.

Distribution of internal and external SNET content/media 326 can be accomplished in a variety of ways in accordance with various embodiments of the disclosure. For example, media distribution may involve an adaptive or parallel network routing infrastructure involving a wide variety of communication protocols and wired and/or wireless communications channels. SNET content/media 326 may comprise, for example, various user-driven (advertising) channels, pictures, videos, links, online text, etc. Access to such content, as well as communications with and remote access to social devices 302 of the SNET circle 300, may occur over an Internet backbone 328, cellular communication system, WAN, LAN, etc.

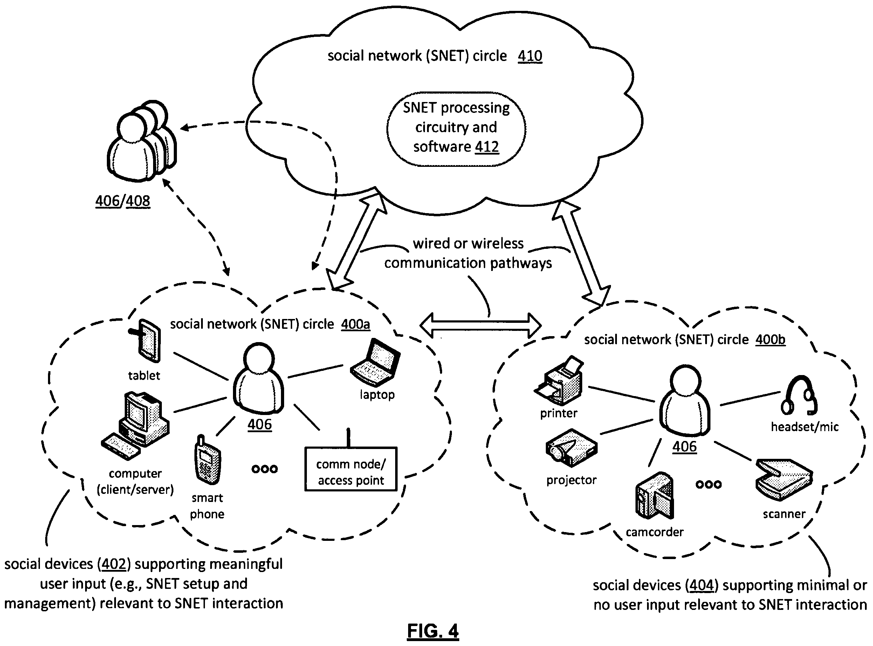

FIG. 4 illustrates various embodiments of social device membership and accessibility in social network circles/sub-circles in accordance with the disclosure. In this embodiment, membership in an SNET circle 410 may be extended to encompass public and private social devices and equipment. For example, in an SNET circle 410 that includes human members 406/408, each human member may have a respective personal SNET sub-circle 400(a)/400(b) of associated or docked social devices 406/408 capable of independent or aggregated participation in the SNET circle 410. The SNET sub-circle may be locally or remotely accessible by a human member 406/408 and/or other SNET circle/sub-circle members through various means, such as clicking on an icon or tag associated with the human member/personal sub-circle.

Although SNET sub-circles 400(a) and 400(b) are illustrated as separate sub-circles, such sub-circles may instead comprise a single SNET circle or sub-circle, or any number of additional SNET circles and/or sub-circles, each of which may include various combinations of social devices 402/404. Further, SNET processing circuitry and software 412 of the illustrated embodiment manages formation and operation of the SNET circle 410. The SNET processing circuitry and software 412 may be incorporated in a standalone server, social devices, and/or cloud-based resources. The SNET circle 410 may be persistent or of limited duration, and include ad hoc and/or static associations.

Exemplary social devices 402/404 may be broadly categorized as either (i) social devices 402 that include a user or SNET circle interface sufficient to provide meaningful input to SNET interaction and (ii) social devices 404 that support minimal or no user input relevant to SNET interaction. More particularly and without limitation, the first category may include computers, tablet devices, IPTVs, IPTV set top boxes, smart phones, servers, laptops, cloudbooks, network attached storage devices, gaming consoles, media players/sources, communication nodes (access points, routers, switches, gateways, etc.), user interface devices, power line communication (PLC) devices, etc. Such social devices may receive user input for SNET setup and management. The second category may include, again without limitation, printers, projectors, cameras and camcorders, scanners, speakers, headsets, smoke detectors, alarm systems, video cameras, mice, etc. In general, docked social devices include any electronic device that could be operably coupled to or docked in an SNET circle/sub-circle via wired or wireless pathways to participate as an SNET member.

As will be appreciated, by docking social devices, members of an SNET circle 410 may gain full or partial remote control and interaction such devices via an authorized member SNET account. For example, family members authorized to participate in a "family" SNET circle may remotely access docked social devices via one or more associated SNET accounts.

In some embodiments, behavioral aspects of when people use social networking are examined to forecast demand. If usage information is available and predictive, it may be possible to re-balance/re-target certain elements of the infrastructure (hosting, ports, drives, etc.). This in turn may permit energy conservation. Rebalancing can include real-time, dynamic response to an anticipated peak, e.g., in response to an event. Rebalancing may also factor in locality, travel patterns, etc.

In some embodiments, Data centers and communication infrastructure are adapted to such usage patterns. If administrators determine that members are active in their accounts, are downloading media, etc., that information can be used to reprogram or restructure policies, e.g., at the chip and/or port level, to respond to a current usage reality. For example, if a user (or user population) transitions from the office to the home, the infrastructure may be rebalanced to account for the shift. In some embodiments, the foregoing energy usage paradigm may be applied to "pay-per-click" and like advertising. Relevant usage patterns may be based, for example, on the number of clicks (or actions), frequency of usage on a per person basis, and/or frequency of use by an aggregate population over a given period.

In some embodiments, wherein members may switch back and forth between devices while interacting with one or more media clouds and social networks, a "view" is reestablished that corresponds to breaks in content delivery. In conjunction, content may be redistributed, on the infrastructure side, based on where it is likely to be consumed. Versioning of content (e.g., lower quality if in another county, transcoding pictures and video, etc.) may also be utilized. Further, server farms located in different regions might replicate content in a number of servers, but perhaps at different quality levels or on a partial basis. Location-based access rights may likewise be utilized. In addition, global account configuration instance can be maintained such that all or a grouping of a user's social devices can be configured to utilize subscribed services.

FIG. 5 is a schematic block diagram of an exemplary social device 500 comprising integral functionality operable to support social network circle/sub-circle membership and communications in accordance with the disclosure. In the illustrated embodiment, a communication interface and transceiver circuitry 502 is operable to perform wired or wireless communications between the social device 500 and an SNET circle/sub-circle 522 over one or more communication channels. Depending on the capabilities and configuration of the social device 500, communications with an SNET may be unilateral or bidirectional/interactive, and utilize either a proprietary or standardized communication protocol.

The social device 500 further includes processing circuitry 504 operable to process and manage communications, services and associations between the device and other entities including members of an SNET circle 522, third parties, software agents, etc. More particularly, the processing circuitry 504 may include, for example, a software management application 504 comprising one or more of docking logic 514, communication protocol control 516 and security/authentication functionality 518.

The social device 500 further may utilize that may take many forms and be maintained in static or dynamic memory. Such profile information enables a social device and/or user 501 to present an image of itself and its capabilities to other members of an SNET. As described more fully below, device and user profile information 506 and 508 may be utilized in various ways in accordance with the disclosure to facilitate a variety of social interactions. Depending on the capabilities and requirements of a particular device (and other members of an SNET), a device or user profile may be static or dynamic.

In certain embodiments, the social device 500 may interact with a user(s) 501 via user interface circuitry 510. User input to the social device 500 may include, for example, data entry through a keypad, touchscreen, remote control device, gaming controller, device control buttons, voice or gesture commands, storage device, etc. Authorized access to or control of the social device 500 can be facilitated through unique biometric identifiers, passwords, token-based identification, trusted authorities or documents such as a driver's license or passport, and like authentication means.

The social device 500 may perform core or underlying functionality 520, various examples of which are described herein. Alternatively, the social device may primarily function as a social networking interface or communication device, or be programmable to perform specific functions within an SNET circle/sub-circle.

In traditional social networks, content hosting typically employs very simplistic, location or regional-based approaches. In some embodiments according to the disclosure, a content hosting environment/service is provided which spans between a cloud computing network or social network, middling server node, social device, or the like. Such hosting services can, in some embodiments, be adaptive and automatic (automated), with or without member knowledge or interaction.

For example, recent SNET social content may be accessed much more frequently than older content. Further, some posted content might generate little interest while others will generate volume access and downloads. Based on these and/or other such considerations, SNET access to social content (e.g., by group or circle membership, including humans and devices) according to the disclosure may be limited to a household, local group, region, or span different continents. A web service that mimics or enhances the functionality of a downloaded/native application can be employed to facilitate or improve social media hosting.

In accordance with a further embodiment providing actual and/or predicted demand-based adaptive content hosting, changing demand for and/or storage of media is used as a basis for establishing future content hosting migrations and starting locations. Renewed or increasing demand, as well as prior related content demand characteristics can be utilized to educate adaptive content hosting.

In particular, posting of media content to a social network (e.g., Facebook) may result in changes to storage of such content over time based on user setup, interest (access rates), content sizing, pricing, node availability, etc. Such content, if popular, may be copied many times over at various cloud computing centers around the world. As time progresses, demand may drop and only a single copy in one computing center is maintained. As further time passes and demand drops to very low levels, a cloud copy may be dropped and serviced and by an external, local server node (e.g., STB server, client device, etc.) maintained by the poster. New events might trigger renewed interest resulting in copying to at least a single cloud computing center. Alternatively, a relative low quality reproduction of the content might be hosted in the cloud, while the original content is stored locally. Selective DRM may be employed as necessary, as well as behind-the-scenes "pushing" of content. Further, networking resources may be reallocated as necessary to support the foregoing actions.

In another embodiment, automated, predictive and/or user-selectable adaptive transcoding is performed on particular social content upon initial upload. Persistent capabilities may be employed to adapt to both lower and higher resolution transcoding. Storing and transmitting user content can be resource intensive, particularly with respect to users who share a great deal of content. However, not all content is created equal. Some items are material for which quality is very important, such as a new song the user is trying to sell, or video capturing a special event. On the other hand, quality is less important for other content, such as video of a pet. Actual and predicted demand for such uploaded content is taken into consideration for transcoding purposes. Further, capabilities of an intended media player device, etc., may be taken into account.

Other considerations and applications may be used in various embodiments of the disclosure including, for example, actual and predicted content demand, intended use, and a user's desire to determine (a) where to host the content (cloud and/or home-cloud); (b) number of instances of hosted copies; and (c) whether to transcode the content to one or more appropriate formats and/or resolutions (accounting for conditional access requirements) In addition, a user may be allowed to override (self-select) a certain amount of content that is to be shared at a desired highest quality level, with the remainder of the posted content (if any) shared at a lower quality level. Uploading of different versions of content for differing usage models, etc., as well as the docking state of a social device, may also affect transcoding and/or delivery of the content. A configuration menu may also be provided that allows certain content to be flagged for improved treatment if available.

Alternatively, a user may to elect to pay for posting higher quality content -- either above a certain threshold or always. Additionally, a pay-per-click model can be implemented. For instance, each time an item of posted content (e.g., a song) is shared, the user can be billed a certain amount. The advertising model may likewise extend to shared content, including audio/video, images, text files, etc.

Storage of the original content or high quality version thereof may exist not only on the original source device, but may be moved to a middling node (e.g., a gateway or STB) to support later adaptation should higher resolution/quality be desired. Burst uploading of one or several images or video in a low resolution mode may be utilized to provide immediate access. Thereafter, higher quality version may be uploaded in a relatively slow or selective manner (perhaps behind the scenes and due to demand).

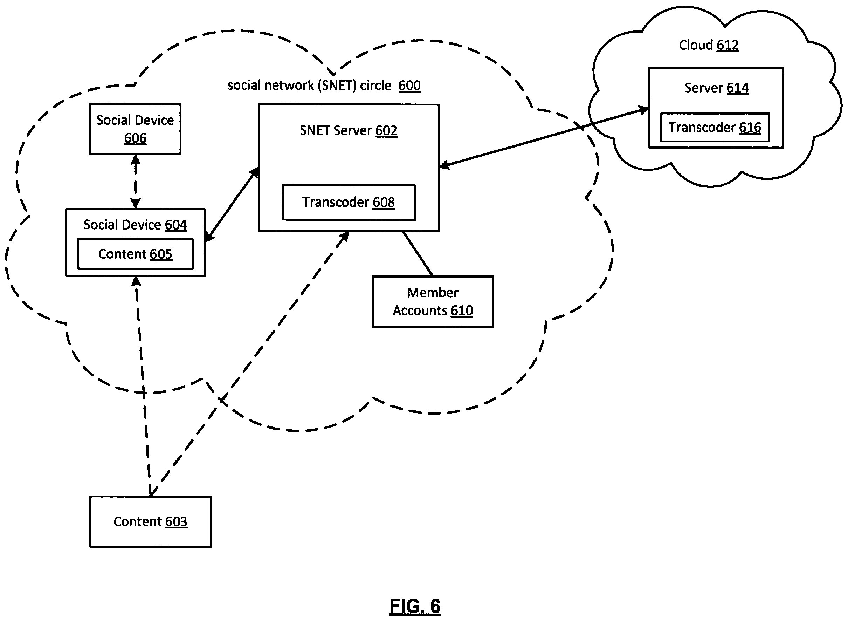

FIG 6 illustrates a diagram according to an embodiment of the disclosure. Social network (SNET) circle 600 can include a server 602, one or more social devices 604 and 606, and the like. Information associated with SNET circle 600, including, without limitation, information associated with one or more member accounts 610, profiles, or the like, may be stored in SNET server 602, one or more social devices 604 and 606, a separate device, some combination thereof, or the like. SNET circle 600 may be linked to other devices on other networks. For example, SNET server 602, or some other one or more devices in SNET circle 600, may be linked to a cloud computing network 612. The cloud computing network may include one or more devices including, without limitation, one or more servers 614.

In some embodiments, instances of content item 603 may be uploaded to one or more devices on SNET circle 600. For example, a user of social device 604 may receive an instance of content item 603 at the social device 604, the SNET server 602 may receive an instance of content item 603 from a device within or without SNET circle 600, some combination thereof, or the like. Upon receiving notice that a member of SNET, including, without limitation, a user or social device, desires to upload one or more instances of content item 603 to SNET circle 600, one or more of the devices in SNET circle 600 can, in some embodiments, determine how to distribute and transcode instances of the content item 603. Such determinations can be made based upon information associated with the content item, one or more devices, servers, users, or the like in SNET circle 600, other networks 612 and devices therein, some combination thereof, or the like. For example, social device 604, upon receiving a notice that a user desires to upload or post an instance of content item 603 to SNET circle 600, may determine the level of demand for an instance of content item 603. Such a level of demand may be the historical demand for other instances of the content item or similar content items, actual demand for an instance of the content item, projected future or likely demand for an instance of the content item, some combination thereof, or the like.

In some embodiments, factors used in determining demand include, without limitation, network traffic associated with the source user, device, or the like from which the original instance of the content item 603 is received, historical network activity or traffic associated with similar content items or instances of the content item, downloads of content items over a certain period of time, the type of content item, metadata associated with the content item, information provided manually via user input, a level of importance assigned to the content item by a user or a device, likely duration of certain levels of demand, some combination thereof, or the like. Demand level may be quantified as a value and compared against a threshold value, such that a demand level meeting, exceeding, or the like of the threshold value is identified as "high" demand and otherwise is "low" demand. The information utilized to determine demand levels may be received, solicited or unsolicited, at a device from a user interface, as metadata of the content item, from SNET member account profiles 610 associated with one or more users, devices or the like, some combination thereof, or the like.

In some embodiments, one or more devices in SNET, upon determining the demand level, or some other property associated with an instance of the content item 603, distribute instances of the content item accordingly. For example, when social device 604 determines that instances of content item 603 will have a high demand, social device 604 may store or host an exact copy or instance 605 of the content item 603 at the social device 604. The instance 605 may be stored in a memory, or the like. In addition, the social device may distribute additional instances of content item 603 to other devices 606 in the network, including, without limitation, an SNET server 602, a network node, or the like. Social device 604 may also distribute one or more instances of content item 603 to other networks. For example, in response to determining that the level of demand for an instance of the content item 603 is high, social device 604 may distribute an instance of the content item to be stored or hosted on a cloud computing network 612, on a device 614 in such a network, or the like.

In some embodiments, one or more instances of content may be created by copying an instance of content item 603. Such creation may occur at one or more devices 604, 606, and 602 in SNET circle 600. One or more instances of content item 603 may be transcoded to one or more various formats, configurations, or the like. Such transcoding may be facilitated by a transcoder 608, which may be located on one or more device in SNET circle 600, or located on a separate network. The transcoding can be performed in accordance with user input, internal logic of one or more devices in SNET circle 600, or the like. For example, in response to determining that demand for instances of content item 603 will likely be high, social device 604 may forward an instance of content item 603 to SNET server 602 to be copied and transcoded into one or more instances of content item 603 having one or more various formats or configurations including, without limitation, high-quality format, low-quality format, or the like. Such instances may be distributed according to their individual formats, user input, or some other logic. For example, social device 604 may instruct SNET server 602, or SNET server 602 may decide according to its own logic, to distribute low-quality instances of content item 603 to be hosted or stored at various locations, including, without limitation, on a device, including, without limitation, a server 614 in a separate network, such as a cloud computing network 612. Alternatively, SNET server 602 may distribute high-quality instances of content item to be stored or hosted on one or more devices 604 and 606 in SNET circle 600, such as the source device from which an instance of the content item 603 was originally received.

In some embodiments, a device in SNET circle 600 can distribute an instance of content item 603 to be transcoded on a separate network, one or more devices on a separate network, or the like, and returned to one or more devices in the SNET circle 600. For example, SNET server 602 may, in response to determining that demand for content item 603 is likely to be high, distribute an instance of content item 603 to a cloud computing network 612. Upon receipt of the instance of content item 603 in the cloud computing network, a transcoder 616 in the cloud computing network, which may or may not be located in a server 614 in the cloud computing network, can transcode one or more instances of content item 603 according to instructions provided from SNET server 602, a social device 604, user input, internal logic, some combination thereof, or the like. For example, SNET server 602 can instruct transcoder 616 to transcode a high-quality instance of content item 603 and a low-quality instance of content item 603. In some embodiments, at least one instance transcoded in a separate network is distributed back to the SNET circle from which an instance of the content item 603 was originally received. For example, after having transcoded a high-quality instance and a low-quality instance of content item 603, as discussed above, one or more devices in cloud computing network 612 can distribute one or more high-quality instances of content item 603 back to SNET circle 600 to be hosted or stored on a device in SNET circle including, without limitation social device 604, SNET server 602, or the like, while one or more low-quality instances of content item 603 are stored or hosted in cloud computing network 612. The device in SNET circle 600 to which a transcoded instance of content item 603 is distributed from cloud computing network 612 may or may not be a device that originally received an instance of content item 603 from a user, separate device, or the like.

In some embodiments, one or more devices may monitor instances of content item 603 to determine whether information associated with the instances has changed. Such monitoring may be performed continuously, periodically on a regular schedule, randomly, occasionally, some combination thereof, or the like. If a change in the information associated with an instance is detected, one or more devices may decide, based on internal logic, user input, or the like, to alter the way one or more instances of the content item 603 are hosted or stored. For example, in response to determining that demand for instances of content item 603 have fallen below a certain threshold value, SNET server may command that all low-quality instances of content item 603 currently stored or hosted on other networks 612 are to be removed, and only one or a few instances of the content item 603 are to be stored or hosted within SNET circle 600 on one or more select devices. Such select device can be the source device 604 from which an instance of the content item 603 was originally received, a server 602 local to the source device 604, a network node, or the like. The remaining instances of the content item 603 may be only of a high-quality format, a low-quality format, a format identical to that of the original instance of the content item 603, some combination thereof, or the like. Alternatively, in response to determining that demand for instances of content item 603 have risen above a threshold value, which may or may not be the same threshold value, social device 604 may copy and transcode lower-quality format instances of the instance 605, currently hosted at social device 604, to be distributed to other devices within and without SNET circle 600.

In some embodiments, changes can be made to the hosting of instances of content items in response to other factors, or some combination thereof. Such changes can be made in response to a trigger event. In some embodiments, one or more devices in SNET circle 600 may respond to a trigger event by limiting access to one or more instances of content item 603. The limitation of access may be a bar to access of certain instances of certain formats by entities that are not members of SNET, a bar to access of any instances by certain types of entities, complete removal of certain or all instances of the content item 603 from SNET 603 or other certain networks 612, some combination thereof, or the like. In some embodiments, in response to the elapse of a predetermined period of time since a certain action, one or more devices in SNET may downgrade instances of content item 603, such that instances of content item 603 hosted on one or more various devices are removed or commanded to be deleted, and the remaining instances of content item 603 are hosted on a selected device or devices, removed entirely from SNET circle 600, or the like. Such time periods may be predetermined for all instances of some or all types in SNET circle 600, a value provided by a certain device or user input, part of metadata associated with the content item 603, or the like. Such time periods may run from certain actions, such as when an instance of content item 603 is first received by a device in SNET circle 600, when a device in SNET circle 600 first receives notice that an instance of content item 603 is desired to be uploaded or posted into SNET circle 600, some combination thereof, or the like.

In some embodiments, SNET accounts, profiles, and the like associated with social devices, SNET users, other devices, some combination thereof, or the like can be hosted or stored in one or more various locations. For example, an SNET profile associated with an SNET member account 610 can be stored, cached, or the like, in part, in full, or the like on SNET server 602, social device 604, some other device, or the like. SNET accounts, profiles, and the like can also be stored in devices outside the network to which they relate. For example, information associated with SNET accounts 610, profiles, and the like for SNET 600 can be stored in a device on cloud computing network 612 including, without limitation, server 614.

In some embodiments, dynamic load balancing utilizes SNET/circle member accounts and profiles. Typically, such load balancing has been performed by servers based on traffic considerations. Dynamic load balancing can be performed based on indications and/or predictions of member activity (e.g., when are users and associated nodes most active?), monitoring of member posts and uploads that might generate significant increases in SNET/circle traffic, and other considerations such as those described herein.

For example, SNET processing circuitry/software may select one or more local nodes for servicing an individual member based on such member's historic interactions and friends/groupings. Instead of today's fixed, flat model, consider hierarchical, distributed and adaptive models. Also consider service level application environments, real time data mining, etc. In addition, users who are highly active can be paired within one or more service mechanisms to optimize performance, minimize data transfer, etc. As associations between users change, the virtual communities can be rearranged.

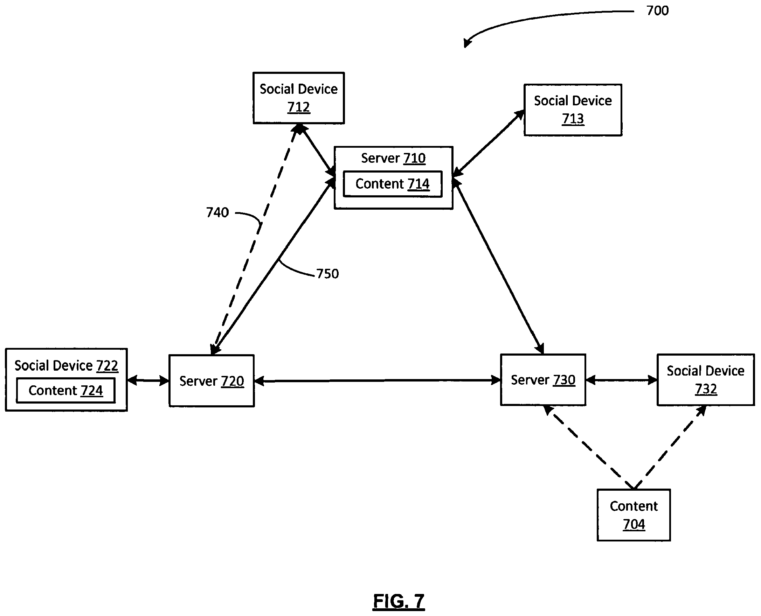

FIG 7 illustrates an embodiment of a network 700 that utilizes dynamic load balancing. The illustrated embodiment of network 700 includes servers 710, 720, and 730, which link social devices 714, 713, 722, and 732, respectively. Social devices in network 700 may be able to link directly 740 with any server or social device in network 700, indirectly via routing 750 through a server, or the like. Each server 710, 720, and 730 in network 700 may have access to information about the other one or more servers, social devices, or the like in the network. For example, server 730 may be able to access information associated with social device 712 including, without limitation, the rate of downloads of content on network 700 or other networks, the most likely network access schedule of social device 712, the most likely other social devices with which social device 712 may try to link in a network access session, the types of content social device 712 is most likely to attempt to access or download, or the like.

As shown in the illustrated embodiment, a server 730 can receive an instance of a content item 704, which can be received directly from a user or directly via a social device 732. Based upon indications of network traffic, user preferences, or the like, instances of the content item 704 can be stored in one or more various locations in the network 700. For example, based upon account information, profile information, or the like associated with social devices 712, 713, 732, and 722, server 730 can determine that social devices 712 and 713 will most likely access an instance of content item 704 more than any other social devices in network 700. As a result, server 730 can distribute an instance 714 of content item 704 to be stored on server 710, which can, in some embodiments, be selected due to being the most local server, by way of being the most geographically proximate server, the server with the most direct or fastest connection to social devices 712 and 713, some combination, or the like. Distributing instance 714 of content item 704 to be stored or hosted on server 710 can reduce the amount of traffic between servers caused by social devices 712 and 713 attempting to access an instance of content item 704. The decision upon where to distribute an instance of content item 704 may be made by a social device 732, server 730, a plurality of servers, some combination thereof, or the like.

In some embodiments, an instance of a content item can be distributed to be stored on a social device including, without limitation, the source of the content item, some other device, or the like. For example, server 730 can determine, based upon network traffic information, user account information, device account information, or the like, that social device 722 will likely attempt to access an instance of content item 704 sufficiently often to justify distributing an instance 724 of content item 704 to be stored on social device 722. In an embodiment where an instance 714 of content item 704 is stored on server 710, it might make more sense to store an instance 724 on social device 722, rather than require social device 722 to link with server 710 to access instance 714. In addition, it might make more sense to store an instance 714 on server 710, rather than require social device 712 to link, directly, indirectly, or the like, with social device 722 to access instance 724.

In some embodiments, one or more of the social devices or servers in network 700 can access information associated with network traffic and device or user accounts to determine the optimal linking of devices in the network 700. For example, server 720 can access information associated with social 712 and determine that, because a majority of social device 712's network traffic involves accessing content on server 720, accessing or communicating with social device 722, some combination thereof, or the like, social device 712 can be linked directly 740 to server 720, rather than being linked indirectly 750. Such a link can, in some embodiments, be specialized with respect to other network links, including, without limitation, having a higher bandwidth than other links. The information associated with the social device 712 may include, without limitation, network access history of the device or users commonly associated with the device, user or device accounts that describe network access history or habits, download history, some combination thereof, or the like. In some other embodiments, server 720 may establish a direct link 740 with social device 712 where social device 712 determines that a direct link 740 would have properties different from that of an indirect link 750, including, without limitation, a faster connection speed, higher bandwidth, or the like.

In some embodiments, one or more instances of a content item can be stored or hosted at one or more various locations based upon the geographic location, region, area, or the like in which the instances are uploaded into the network. For example, a user of social device 732 may normally reside in a first geographic location, such as Dallas, Texas, such that content normally uploaded into network 700 by the user of social device 732 is stored or hosted on server 710 based upon geographic proximity of server 710 to social device 732. In such an example, when the user of social device 732 takes the device 732 with him on a trip through an area of Germany where devices in network 700 are normally served by server 730, instances of content item 704 uploaded to network 700 by social device 732, its user, or the like can be hosted or stored on server 730, rather than being transmitted to be stored or hosted on the server 710 that is traditionally used by the user of social device 732. In this way, instances of content item 704 that are uploaded to some or all of network 700 from a certain geographic region, area, location, or the like can be hosted or stored in such a manner that is optimized for access to the instances from the same or other proximate geographic locations, regions, areas, and the like. For example, in the above example, media content items uploaded to network 700 from Germany can be stored or hosted on a server 730 that provides optimal access, as determined by access time, traffic, latency, or the like, for users of network 700 that are located in Germany. This can enable the user of social device 732 to better access instances of content items 704 uploaded to network 700 while the user is still in Germany, to enable local German residents to better access locally-uploaded content, or the like.

In some embodiments, content stored or hosted in one or more locations may be copied, transferred, or the like to one or more other locations based upon variations in network access habits of one or more social devices, network users, or the like. For example, in continuing the above-discussed network user's trip to Germany, upon the conclusion of such trip and the user's return to the Dallas, Texas area, one or more instances of content item 704 that were uploaded to network 700 while the user was in Germany, which may be stored or hosted on a storage or hosting server 730 that is optimized for access to the instances of content item 704 by network 700 users located in Germany, may be transmitted to server 710 upon determining that the social device that is the source of the instance of content item 704, the user of social device 732, some combination thereof, or the like, is now in a geographic location, region, area, or the like for which server 710 is the optimal storage or hosting location. Such a determination that the social device 732, its user, or the like has moved to a different location can be determined by network traffic, access habits by social device 732 or its user, some combination thereof, or the like. In some embodiments, upon transfer of one or more instances of content item 704 from one location to another, one or more instances may maintained at the first location, deleted at the first location, or the like. For example, upon the return of social device 732 and its user to Dallas Texas, a high-quality instance of content item 704 can be transferred from server 730 to server 710, while a low-quality instance of content item 704 remains stored or hosted at server 730.

In some embodiments, the geographic location, region, area, or the like for which an optimal location to store or host one or more instances of a content item is selected can be determined based on features, information, or the like associated with the instances of the content item. For example, an instance of a photograph uploaded to server 720 from social device 722 may include information associated with the photograph that indicates that the photograph was taken in Germany. Based upon analysis of this information by social device 722, server 720, some other server or device, some combination thereof, or the like, one or more instances of the photograph can be transferred to server 730, which is the optimal storage or hosting location for instances of a content item to be accessed by German network users, devices, and the like. For example, where the photograph was taken in Germany, but is uploaded to a server 720 that is optimal for Italian access, the server 720 can device to transfer one or more instances of the photograph to server 730 for optimal German access to the photograph.

Information associated with the content item can include, without limitation, metadata created by a content item source device that created the content item, some other device, or the like that indicates the geographic location, region, area, or the like in which the content item was created. The geographic location, region, area, or the like can be determined from network information, GPS applications, some combination thereof, or the like. In some embodiments, the information indicates a geographic location, region, area, or the like associated with the content item, which is used to transfer one or more instances of the content item to a storage or hosting location that is optimized for access from the same or a similar location. The information can include metadata, as discussed above, features of the content item, or the like. Such features can include, without limitation, text information that provides indications of the relevant geographic location, region, area, or the like. For example, a photograph taken in Munich, Germany may include, in the photograph image, signs, landforms, text, structures, landmarks, some combination thereof, or the like that a device, including social device 722, server 720 some other device, some combination thereof, or the like can analyze to determine that the photograph was taken in Germany, Bavaria, Munich, Europe, or the like, and then transfer one or more instances of the photograph to a storage or hosting location that enables optimal access from the network 700 users residing in Germany, Bavaria, Munich, Europe, or the like.

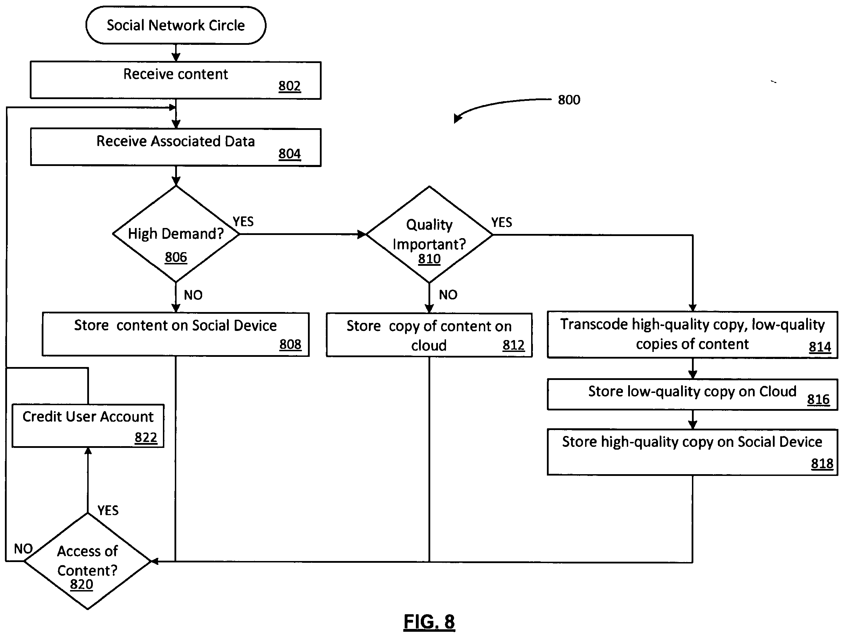

FIG 8 illustrates a flowchart of process 800 according to an embodiment of the disclosure. Process 800 may occur in a computing network, a social networking circle or sub-circle, or the like. In addition, process 800 may be performed by a social device in a social networking circle or sub-circle, a server in a social networking circle or sub-circle, or the like. As shown in block 802, process 800 can include receiving an instance of a content item. In some embodiments, process 800 may include simply receiving a notice that a user desires to upload or post an instance of the content item to a device in the network, the network itself, some combination thereof, or the like. The instance may be an original of a content item, a copy, or the like. The content item can be a media element, a message, a program, or the like. As shown in block 804, process 800 can include receiving associated data, which can include, without limitation, information indicating a user's preferred format of one or more instances of the content item, the projected or historical demand for the content item or similar content items, metadata associated with the content item, such as type of content, an indicator of the relative importance of the quality of one or more instances of the content item, a desired one or more hosting locations of the content item, or the like. The associated data can be received concurrently with the instance of the content item, prior, or after. The associated data can be developed locally by internal logic, by a separate device according to its own internal logic, by user input on an interface, or the like.

As shown in block 806, process 800 can include determining whether the content item is in high demand. The relevant level of demand to be determined can be historical demand for the instances of the content item or similar content items, such as similar types of content or similar source devices or users, projected future demand, or actual demand for other instances of the content item. The level of demand can be determined from the associated data, or some other data or logic. Data involved in determining demand may include, without limitation, average downloads per hour of similar content items or content items from a similar source, historical network traffic associated with the source, or the like. The logic involved in determining the level of demand can include, without limitation, determining if real, historical, and/or projected demand meets or exceeds a predetermined threshold value, a user-provided input, or the like. If demand for an instance of the content item is determined to be low, as shown in block 806, process 800 can include hosting, or storing, one or more instances of a social device. The social device upon which the one or more instances are stored may be the source device from which an instance of the content item, the associated data, or the like was received.

As shown in block 810, process 800 can include determining whether the quality, format, or the like of instances of the content item are important. For example, the associated data, user input, internal logic, or the like may indicate that the content item is of a type of content that must always be available in a high-quality format. In other embodiments, the associated data may indicate whether low-quality instances or copies of the content item are acceptable unless explicitly requested via a command, signal, or the like. The importance of quality or format of the content item may, in some embodiments, determine where instances of the content item are hosted or stored. For example, as shown in block 812 process 800 may include storing an instance of the content item on a cloud computing network. The instance may also be stored on a server that is local to the source device, some other device, or the like. The format, quality, or the like of the instances of the content item may be high, low, equivalent to the received instance, or some other state. For example, if similar, higher-quality instances of the content item are already present in the social network, a low-quality instance of the content item may be hosted or stored on a cloud computing network, and requests for a high-quality instance may be redirected to the existing high-quality instances elsewhere in the network.

As shown in blocks 814, 816, and 818, process 800 can include transcoding one or more instances of the received content item according to one or more internal or externally-applied protocols. For example, as shown in block 814, one or more instances of the content item may be transcoded into a mixture of high-quality and low-quality instances. Different instances with different formats may be distributed to different locations for hosting or storage. For example, as shown in blocks 816 and 818, low-quality instances of the content item may be distributed to a cloud computing network, a server local to the source device or some other device, a network node, some combination thereof, or the like. High-quality instances or copies of the content item may be stored on one or more social devices, servers, or computing networks, to be accessed by network members with certain privileges, in response to an explicit request for instances of the content item in high-quality or some other format, or the like. In some embodiments, transcoding and distribution of an instance of a content item can be determined from a level of importance assigned to the content item, which may itself be based on various factors including, without limitation, demand level, content item type, source device, network account of user providing the content item, some combination thereof, or the like.

As shown in block 820, process 800 can include determining if one or more entities have accessed an instance of the content item. In some embodiments, only the accessing of certain instances of the content item are tracked, including, without limitation, high-quality instances, or the like. The mere action of an access may be tracked, the identity of the entity accessing the instance may be recorded and tracked, or the like. An entity can be a user of a device, a device in the network or some other network, some combination thereof, or the like. Access of an instance can include, without limitation, streaming an instance of the content item from a device, downloading an instance of the content item, some combination thereof, or the like. If an instance is accessed, as shown in block 822, process 800 can include crediting an account of an entity. Such an entity can include the user, device, or the like from which the instance of the content item was originally received, an owner of instances of the content item, a copyright owner, some combination thereof, or the like. The account may be located on the network, or some other network. In some embodiments, in addition to or in alternative to crediting an entity's account, an entity's account may be debited in response to determining that an instance was accessed. For example, an account of a user, device, or the like that is identified as accessing an instance of the content item may be debited a certain amount for each access of an instance, once for all accesses of a certain instance or instances of a certain content item, some combination thereof, or the like. In some embodiments, an account of the entity from which the instance of the content item was received is debited in response to determining that an instance of the content item was accessed.

As shown in the illustrated embodiment, process 800 can be a process loop that can adapt to changed associated data. The process loop may be performed according to a predetermined frequency, at random intervals, in response to a command, or the like. For example, demand data associated with instances of content items in a network may be continuously analyzed to determine if demand for the content item has changed, if the importance of content item quality has changed, if a predetermined time period has elapsed, or the like. If, for example, the data associated with a content item, or one or more instances thereof, indicate that demand for a previously low-demand content item has skyrocketed, risen above a certain threshold value, or the like, process 800 may repeat such that a high-quality instance of the content item is transcoded from the originally-received instance of the content item, a currently-distributed low-quality instance, or the like. In addition, if a previously high-demand instance of a content item is now in low demand, if a certain period of time has elapsed, or the like, process 800 can include removing one or more instances of the content item from existing hosting or storage locations and distributing one or more instances in accordance with low-demand instances of content items, including, without limitation, hosting on the source device.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction software, and/or firmware. As used herein, a module may contain one or more sub-modules that themselves are modules.
While particular combinations of various functions and features of the present invention have been expressly described herein, other combinations of these features and functions are likewise possible. The present invention is not limited by the particular examples disclosed herein and expressly incorporates these other combinations.

## Claims

1. A device comprising:
a memory; and
processing circuitry interoperable with the memory and configured to:
store, in a first location, at least one instance of a content item for distribution via a social network;
determine a level of demand for the content item, the level of demand determined, at least in part, based on a frequency at which access to the content item is requested by members of the social network;
in response to determining that the projected level of demand for the content item is high, transcode the at least one instance of the content item to a high-quality format; and
in response to determining that the projected level of demand for the content item is low, transcode at least one additional instance of the content item to a low-quality format;
distribute the at least one additional instance of the content item to at least a second location in response to the level of demand exceeding a first threshold level; and
in response to the level of demand falling below a second threshold, remove the additional instance of the content item from the at least a second location.

2. The device of Claim 1, the processing circuitry further configured to:
in response to projecting that the level of demand will exceed the first threshold level, distribute at least one instance of the content item to the social network to be stored on a plurality of other devices associated with the social network, each of the plurality of other devices storing at least one instance of the content item.

3. The device of Claim 1, the processing circuitry further configured to:
in response to projecting that the level of demand will exceed the first threshold level, distribute at least one instance of the content item to the social network to be stored on a cloud computing network; and
in response to projecting that the level of demand will not exceed the second threshold level, distribute at least one instance of the content item to be stored on an external local server node.

4. The device of Claim 3, the at least one instance of the content item stored on the cloud computing network is a low-quality instance, and the at least one instance of the content item stored on an external local server node is a high-quality instance.

5. The device of Claim 1, the processing circuitry further configured to:
in response to the elapsing of a period of time, limit access by at least one member of the social network to at least one instance of the content item.

6. The device of Claim 1, the processing circuitry further configured to:
transcode the at least one additional instance of the content item to a low-quality format in response to the level of demand exceeding a first threshold level.

7. The device of Claim 1, the level of demand including a quantity of downloads of the content item over a period of time.

8. The device of Claim 1, the processing circuitry further configured to:
acquire historical activity data associated with at least one member of a social network, the historical activity data including the at least one member's historical interactions with at least one other member of the social network; and
based upon the historical activity data, select at least one network node to enable connections between the at least one member and other members of the social network.

9. The device of Claim 8, the at least one network node is a server node that is local to the device.

10. The device of Claim 8, the historical activity data is acquired via real-time data mining of information associated with the at least one member.

11. The device of Claim 8, the processing circuitry further configured to:
in response to determining, based on the historical activity data, that the at least one member's activity on the social network exceeds a threshold, select at least one network node to provide a high-bandwidth connection between the at least one member and at least one other member of the social network.

12. The device of Claim 1, the processing circuitry further configured to:
receive a notice that a user desires to upload the at least one content item to a social network;
in response to receiving the notice, collect information associated with the at least one content item;
determine a level of importance to assign to the at least one content item; and
transcode a copy of the at least one content item to a first format, based on the level of importance assigned to the at least one content item.

13. The device of Claim 12, the information associated with the at least one content item including a user-provided indication of a desired storage location for at least one instance of the at least one content item.

14. The device of Claim 12, the information associated with the at least one content item including content metadata.

15. The device of Claim 12, the level of importance assigned to the at least one content item including a projected demand for the at least one content item and the first format is a low-quality format.

16. The device of Claim 12, the processing circuitry further configured to:
in response to determining that the information associated with the at least one content item has been updated, re-transcode the instance of the at least one content item to a second format.

## Patentansprüche

1. Vorrichtung, die aufweist:
einen Speicher; und
eine Verarbeitungsschaltung, die mit dem Speicher zusammenarbeitet und konfiguriert ist zum:
Speichern, an einer ersten Stelle, wenigstens einer Instanz eines Inhaltselements zur Verteilung über ein soziales Netzwerk;
Ermitteln eines Nachfrageniveaus für das Inhaltselement, wobei das Nachfrageniveau wenigstens teilweise basierend auf der Frequenz ermittelt wird, mit der Zugriff auf das Inhaltselement durch Mitglieder des sozialen Netzwerks gefordert wird;
im Ansprechen auf das Ermitteln, dass das prognostizierte Nachfrageniveau für das Inhaltselement hoch ist, Umschlüsseln der wenigstens einen Instanz des Inhaltselements in ein Format von hoher Qualität; und
im Ansprechen auf das Ermitteln, dass das prognostizierte Nachfrageniveau für das Inhaltselement niedrig ist, Umschlüsseln wenigstens einer zusätzlichen Instanz des Inhaltselements in ein Format von niedriger Qualität;
Verteilen der wenigstens einen zusätzlichen Instanz des Inhaltselements an wenigstens eine zweite Stelle im Ansprechen darauf, dass das Nachfrageniveau einen ersten Schwellenwert übersteigt; und
im Ansprechen darauf, dass das Nachfrageniveau unter einen zweiten Schwellenwert fällt, Entfernen der zusätzlichen Instanz des Inhaltselements von der wenigstens einen zweiten Stelle.

2. Vorrichtung nach Anspruch 1, wobei die Verarbeitungsschaltung des Weiteren konfiguriert ist zum:
im Ansprechen auf das Prognostizieren, dass das Nachfrageniveau den ersten Schwellenwert überschreiten wird, Verteilen wenigstens einer Instanz des Inhaltselements an das soziale Netzwerk, um auf einer Vielzahl anderer Vorrichtungen, die zu dem sozialen Netzwerk gehören, gespeichert zu werden, wobei jede der Vielzahl anderer Vorrichtungen wenigstens eine Instanz des Inhaltselements speichert.

3. Vorrichtung nach Anspruch 1, wobei die Verarbeitungsschaltung des Weiteren konfiguriert ist zum:
im Ansprechen auf das Prognostizieren, dass das Nachfrageniveau den ersten Schwellenwert überschreiten wird, Verteilen wenigstens einer Instanz des Inhaltselements an das soziale Netzwerk, um auf einem Cloud Computing Netzwerk gespeichert zu werden; und
im Ansprechen auf das Prognostizieren, dass das Nachfrageniveau den zweiten Schwellenwert nicht überschreiten wird, Verteilen wenigstens einer Instanz des Inhaltselements, um auf einem externen lokalen Serverknoten gespeichert zu werden.

4. Vorrichtung nach Anspruch 3, wobei die wenigstens eine Instanz des Inhaltselements, die auf dem Cloud Computing Netzwerk gespeichert ist, eine Instanz von niedriger Qualität ist, und die wenigstens eine Instanz des Inhaltselements, die auf einem externen lokalen Serverknoten gespeichert ist, eine Instanz von hoher Qualität ist.

5. Vorrichtung nach Anspruch 1, wobei die Verarbeitungsschaltung des Weiteren konfiguriert ist zum:
im Ansprechen auf das Verstreichen eines Zeitraums, Begrenzen des Zugriffs durch wenigstens ein Mitglied des sozialen Netzwerks zu wenigstens einer Instanz des Inhaltselements.

6. Vorrichtung nach Anspruch 1, wobei die Verarbeitungsschaltung des Weiteren konfiguriert ist zum:
Umschlüsseln der wenigstens einen zusätzlichen Instanz des Inhaltselements auf ein Format von niedriger Qualität im Ansprechen darauf, dass das Nachfrageniveau einen ersten Schwellenwert überschreitet.

7. Vorrichtung nach Anspruch 1, wobei das Nachfrageniveau eine Anzahl von Downloads des Inhaltselements über einen Zeitraum aufweist.

8. Vorrichtung nach Anspruch 1, wobei die Verarbeitungsschaltung des Weiteren konfiguriert ist zum:
Erhalten historischer Aktivitätsdaten, die zu wenigstens einem Mitglied eines sozialen Netzwerks gehören, wobei die historischen Aktivitätsdaten die historischen Interaktionen des wenigstens einen Mitglieds mit wenigstens einem anderen Mitglied des sozialen Netzwerks beinhalten; und
basierend auf den historischen Aktivitätsdaten, Auswählen wenigstens eines Netzwerkknotens, um Verbindungen zwischen dem wenigstens einen Mitglied und anderen Mitgliedern des sozialen Netzwerks zu ermöglichen.

9. Vorrichtung nach Anspruch 8, wobei der wenigstens eine Netzwerkknoten ein Serverknoten ist, der lokal zu der Vorrichtung ist.

10. Vorrichtung nach Anspruch 8, wobei die historischen Aktivitätsdaten über Echtzeit-Datengewinnung von Informationen, die zu dem wenigstens einen Mitglied gehören, erhalten werden.

11. Vorrichtung nach Anspruch 8, wobei die Verarbeitungsschaltung des Weiteren konfiguriert ist zum:
im Ansprechen auf das Ermitteln, basierend auf den historischen Aktivitätsdaten, dass die Aktivität des wenigstens einen Mitglieds in dem sozialen Netzwerk einen Schwellenwert überschreitet, Auswählen wenigstens eines Netzwerkknotens, um eine Verbindung mit hoher Bandbreite zwischen dem wenigstens einen Mitglied und wenigstens einem anderen Mitglied des sozialen Netzwerks bereitzustellen.

12. Vorrichtung nach Anspruch 1, wobei die Verarbeitungsschaltung des Weiteren konfiguriert ist zum:
Empfangen einer Mitteilung, dass ein Benutzer das wenigstens eine Inhaltselement auf ein soziales Netzwerk hochladen möchte;
im Ansprechen auf das Empfangen der Mitteilung, Sammeln von Informationen, die zu dem wenigstens einen Inhaltselement gehören;
Bestimmen eines Wichtigkeitsgrads, der dem wenigstens einen Inhaltselement zuzuweisen ist; und
Umschlüsseln einer Kopie des wenigstens einen Inhaltselements in ein erstes Format basierend auf dem Wichtigkeitsgrad, der dem wenigstens einen Inhaltselement zugewiesen wurde.

13. Vorrichtung nach Anspruch 12, wobei die Informationen, die zu dem wenigstens einen Inhaltselement gehören, eine vom Benutzer bereitgestellte Angabe einer gewünschten Speicherstelle für wenigstens eine Instanz des wenigstens einen Inhaltselements aufweisen.

14. Vorrichtung nach Anspruch 12, wobei die Informationen, die zu dem wenigstens einen Inhaltselement gehören, Inhalts-Metadaten aufweisen.

15. Vorrichtung nach Anspruch 12, wobei der Wichtigkeitsgrad, der dem wenigstens einen Inhaltselement zugewiesen wurde, eine prognostizierte Nachfrage nach dem wenigstens einen Inhaltselement aufweist und das erste Format ein Format von niedriger Qualität ist.

16. Vorrichtung nach Anspruch 12, wobei die Verarbeitungsschaltung des Weiteren konfiguriert ist zum:
im Ansprechen auf das Ermitteln, dass die Informationen, die zu dem wenigstens einen Inhaltselement gehören, aktualisiert worden sind, Neu-Umschlüsseln der Instanz des wenigstens einen Inhaltselements in ein zweites Format.

## Revendications

1. Dispositif comprenant:
une mémoire ; et
un ensemble de circuits de traitement interopérable avec la mémoire et configuré pour :
stocker, dans un premier emplacement, au moins une instance d'un item de contenu pour distribution par l'intermédiaire d'un réseau social ;
déterminer un niveau de demande pour l'item de contenu, le niveau de demande déterminé, au moins en partie, sur la base d'une fréquence à laquelle un accès à l'item de contenu est requis par des membres du réseau social ;
en réponse à la détermination que le niveau projeté de demande pour l'item de contenu est élevé, transcoder l'au moins une instance de l'item de contenu à un format haute qualité ; et
en réponse à la détermination que le niveau projeté de demande pour l'item de contenu est bas, transcoder au moins une instance additionnelle de l'item de contenu à un format basse qualité ;
distribuer l'au moins une instance additionnelle de l'item de contenu à au moins un deuxième emplacement en réponse au niveau de demande excédant un premier niveau de seuil ; et
en réponse au niveau de demande tombant en-dessous d'un deuxième seuil, supprimer l'instance additionnelle de l'item de contenu de l'au moins un deuxième emplacement.

2. Dispositif selon la revendication 1, l'ensemble de circuits de traitement configuré en outre pour :
en réponse à la projection que le niveau de demande excédera le premier niveau de seuil, distribuer au moins une instance de l'item de contenu au réseau social pour être stockée sur une pluralité d'autres dispositifs associés avec le réseau social, chacun de la pluralité d'autres dispositifs stockant au moins une instance de l'item de contenu.

3. Dispositif selon la revendication 1, l'ensemble de circuits de traitement configuré en outre pour :
en réponse à la projection que le niveau de demande excédera le premier niveau de seuil, distribuer au moins une instance de l'item de contenu au réseau social pour être stockée sur un réseau informatique en nuage ; et
en réponse à la projection que le niveau de demande n'excédera pas le deuxième niveau de seuil, distribuer au moins une instance de l'item de contenu pour être stockée sur un noeud de serveur local externe.

4. Dispositif selon la revendication 3, l'au moins une instance de l'item de contenu stockée sur le réseau informatique en nuage est une instance basse qualité, et l'au moins une instance de l'item de contenu stockée sur un noeud de serveur local externe est une instance haute qualité.

5. Dispositif selon la revendication 1, l'ensemble de circuits de traitement configuré en outre pour :
en réponse à l'écoulement d'une période de temps, limiter l'accès par au moins un membre du réseau social à au moins une instance de l'item de contenu.

6. Dispositif selon la revendication 1, l'ensemble de circuits de traitement configuré en outre pour :
transcoder l'au moins une instance additionnelle de l'item de contenu à un format basse qualité en réponse au niveau de demande excédant un premier niveau de seuil.

7. Dispositif selon la revendication 1, le niveau de demande incluant une quantité de téléchargements de l'item de contenu sur une période de temps.

8. Dispositif selon la revendication 1, l'ensemble de circuits de traitement configuré en outre pour :
acquérir des données historiques d'activité associées avec au moins un membre du réseau social, les données historiques d'activité incluant les interactions historiques de l'au moins un membre avec au moins un autre membre du réseau social ; et
sur la base des données historiques d'activité, sélectionner au moins un noeud de réseau pour permettre des connexions entre l'au moins un membre et d'autres membres du réseau social.

9. Dispositif selon la revendication 8, l'au moins un noeud de réseau est un noeud de serveur qui est local pour le dispositif.

10. Dispositif selon la revendication 8, les données historiques d'activité sont acquises par l'intermédiaire d'une exploration de données en temps réel d'informations associées avec l'au moins un membre.

11. Dispositif selon la revendication 8, l'ensemble de circuits de traitement configuré en outre pour :
en réponse à la détermination, sur la base des données historiques d'activité, que l'activité de l'au moins un membre sur le réseau social excède un seuil, sélectionner au moins un noeud de réseau pour fournir une connexion en large bande passante entre l'au moins un membre et au moins un autre membre du réseau social.

12. Dispositif selon la revendication 1, l'ensemble de circuits de traitement configuré en outre pour :
recevoir une notification qu'un utilisateur désire charger l'au moins un item de contenu sur un réseau social ;
en réponse à la réception de la notification, collecter des informations associées avec l'au moins un item de contenu ;
déterminer un niveau d'importance à attribuer à l'au moins un item de contenu ; et
transcoder une copie de l'au moins un item de contenu à un premier format, sur la base du niveau d'importance attribué à l'au moins un item de contenu.

13. Dispositif selon la revendication 12, les informations associées avec l'au moins un item de contenu incluant une indication fournie par l'utilisateur d'un emplacement de stockage désiré pour au moins une instance de l'au moins un item de contenu.

14. Dispositif selon la revendication 12, les informations associées avec l'au moins un item de contenu incluant des métadonnées de contenu.

15. Dispositif selon la revendication 12, le niveau d'importance attribué à l'au moins un item de contenu incluant une demande projetée pour l'au moins un item de contenu et le premier format est un format basse qualité.

16. Dispositif selon la revendication 12, l'ensemble de circuits de traitement configuré en outre pour :
en réponse à la détermination que les informations associées avec l'au moins un item de contenu ont été mises à jour, re-transcoder l'instance de l'au moins un item de contenu à un deuxième format.
